# EUROPEAN PATENT APPLICATION

(11) **EP 4 364 919 A1**
(43) Date of publication of application: **08.05.2024**
(21) Application number: 22833269.8
(22) Date of filing: 30.06.2022
(51) Int. Cl.: B29C 43/34, B29C 43/20, B32B 3/30, B32B 5/18, B32B 38/06, C08J 9/36

(54) **METHOD FOR MANUFACTURING LAMINATE SHAPED TO HAVE IRREGULARITIES, LAMINATE FOR SHAPING IRREGULARITIES, AND LAMINATE SHAPED TO HAVE IRREGULARITIES**

(30) Priority: 30.06.2021 JP 2021108877
(71) Applicant: Inoac Corporation, Nagoya-shi, Aichi 450-0003 (JP)
(72) Inventor: NAKAO, Hiroshi, Anjo-shi, Aichi 446-8504 (JP); KATO, Masaki, Hatano-shi, Kanagawa 259-1304 (JP)
(74) Representative: Berggren Oy
(86) International application number: PCT/JP2022/026188
(87) International publication number: WO 2023/277123

(57) **Abstract**

The purpose of the present invention is to provide a laminate shaped to have fine irregularities using a general-purpose soft polyurethane foam without using a soft polyurethane foam having a special configuration. A soft polyurethane foam and a flexible surface member are laminated via a moisture-curing hot-melt adhesive. By curing the moisture-curing hot-melt adhesive, the soft polyurethane foam and the surface member are laminated and integrated with each other to form a laminate for shaping irregularities. The laminate for shaping irregularities is heated and compressed by a heating compression device having irregularities on a pressing surface thereof to shape irregularities on a surface of the laminate for shaping irregularities.

## Description

### Technical Field

The present invention relates to a method of producing an irregularly shaped laminated body, a laminated body for irregular shaping, and an irregularly shaped laminated body.

### Background Art

As a skin material used for a skin for a seat of a vehicle such as an automobile, a skin for furniture, or the like, there is an irregularly shaped laminated body.

The irregularly shaped laminated body is manufactured by laminating and integrating a flexible surface member on a soft polyurethane foam and thermally compressing a surface with a thermal compression device having a surface with irregularities formed thereon.

As a conventional irregularly shaped laminated body, there is a laminated body obtained by using a soft polyurethane foam that is easily thermally molded due to a polyol, a flame retardant, or the like being incorporated, an ester value being specified, and the like, and welding the soft polyurethane foam and a surface member by frame lamination (Patent Document 1).

### Prior Art Document

### Patent Document

Patent Document 1: Japanese Patent No. 6389589

### SUMMARY OF INVENTION

### Technical Problem

In the laminated body obtained by welding a soft polyurethane foam in which a polyol, a flame retardant, or the like is incorporated and a specific ester value or the like is used, and a surface member by frame lamination, usable soft polyurethane foams are limited, and general-purpose soft polyurethane foam cannot be used.

In view of the above points, an object of the invention is to enable irregularities to be shaped using a general-purpose soft polyurethane foam without using a special soft polyurethane foam.

### Solution to Problem

A first means is a method of producing an irregularly shaped laminated body, including: forming a laminated body for irregular shaping by layering soft polyurethane foam and a flexible surface member via a moisture-curable hot melt adhesive; and subjecting the laminated body for irregular shaping to thermal compression with a thermal compression device having irregularities on a pressing surface and performing irregular shaping on the laminated body for irregular shaping.

A second means is a laminated body for irregular shaping which is obtained by layering and integrating a flexible surface member on and with soft polyurethane foam, in which the soft polyurethane foam and the surface member are bonded by a moisture-curable hot melt adhesive.

A third means is an irregularly shaped laminated body which is obtained by layering and integrating a flexible surface member on and with soft polyurethane foam, in which the soft polyurethane foam and the surface member are bonded by a moisture-curable hot melt adhesive.

### Advantageous Effects of Invention

According to the invention, soft polyurethane foam and a flexible surface member are bonded by a moisture-curable hot melt adhesive, and favorable irregularities can be shaped using general-purpose soft polyurethane foam without using soft urethane foam having a special composition.

### BRIEF DESCRIPTION OF DRAWINGS

Fig. 1 is a cross-sectional view showing a part of an irregularly shaped laminated body according to an embodiment.
Fig. 2 is a schematic cross-sectional view showing a step of producing a laminated body for irregular shaping.
Fig. 3 is a schematic cross-sectional view showing an irregular shaping step.
Fig. 4 is a table illustrating a configuration or the like of examples.
Fig. 5 is a table illustrating a configuration or the like of comparative examples.
Fig. 6 is a table showing contents of moisture-curable hot melt adhesives.

### DESCRIPTION OF EMBODIMENTS

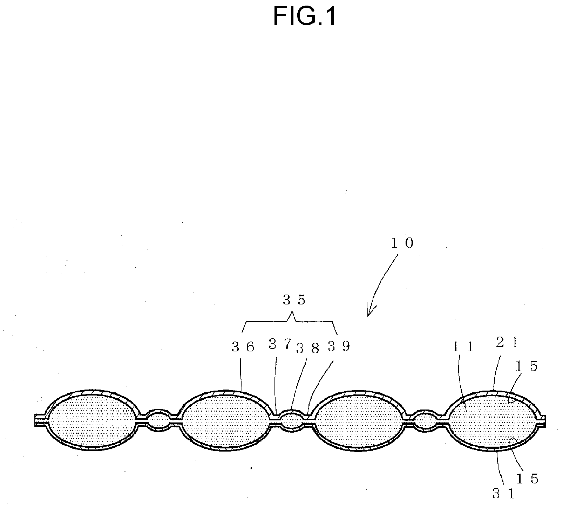

Hereinafter, embodiments of the invention will be described. An irregularly shaped laminated body 10 shown in Fig. 1 is used for an interior material of a vehicle, for example, a skin for a seat, a door trim, a skin for furniture, or the like. The laminated body 10 includes soft polyurethane foam 11, a surface member 21 which is bonded to one surface of the soft polyurethane foam 11 with a moisture-curable hot melt adhesive 15, and a back surface member 31 which is bonded to the other surface with the moisture-curable hot melt adhesive 15, and has an irregularity 35 shaped on a surface thereof. The back surface member 31 is a member provided, if necessary. Details of each member will be described later.

The irregularity 35 illustrated in the drawing has a configuration in which a first protrusion 36, a recess 37, a second protrusion 38, and a recess 39 are adjacent to one another, and has an aspect in which the recesses and protrusions extend linearly in one direction (for example, a lengthwise direction) of the irregularly shaped laminated body 10. An aspect of the irregularity 35 is not limited to the aspect in which recesses and protrusions extend linearly as illustrated in the drawing. For example, the recesses and protrusions may form a lattice, a rhombus, a circle, or the like in an appropriate manner. Also, the protrusion illustrated in the drawing is configured by two types of protrusions including the first protrusion 36 and the second protrusion 38 having different heights, but may be configured by one type or three or more types of protrusions.

The production of the irregularly shaped laminated body 10 is performed by a step of producing a laminated body for irregular shaping and an irregular shaping step.

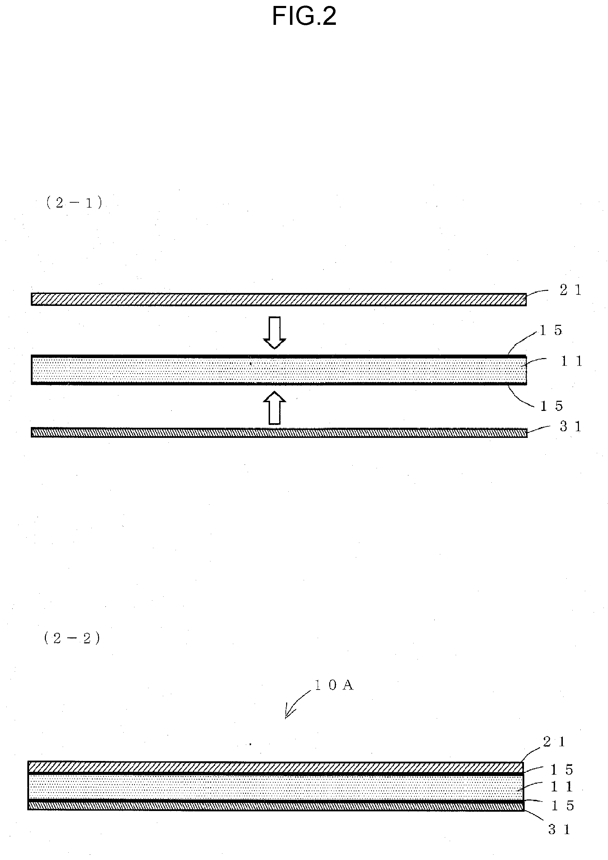

Fig. 2 (2-1) shows the step of producing a laminated body for irregular shaping.

The surface member 21 and the back surface member 31 are layered on the soft polyurethane foam 11 via the moisture-curable hot melt adhesive 15, and the soft polyurethane foam 11, the surface member 21, and the back surface member 31 are layered and integrated by reacting and curing the moisture-curable hot melt adhesive 15 with water such as moisture in the air.

Thus, a laminated body for irregular shaping 10A shown in Fig. 2 (2-2) is formed. In a case in which the back surface member 31 is not layered, a moisture-curable hot melt adhesive for the back surface member 31 is also unnecessary.

The soft polyurethane foam 11 is formed of a polyurethane raw material containing a polyol, a foaming agent, a catalyst, a foam stabilizer, a polyisocyanate, and an appropriate additive, and a general-purpose soft polyurethane foam can be used. Examples of the soft polyurethane foam include ether-based polyurethane foam using an ether-based polyol and ester-based polyurethane foam using an ester-based polyol for a polyol. The soft polyurethane foam 11 in the invention may be either one, and ether-based polyurethane foam that is less prone to humid heat deterioration is more preferable.

In the soft polyurethane foam 11, a density (in accordance with JIS K 7222) is from 13 to 80 kg/m³ and more preferably from 15 to 70 kg/m³, a hardness (in accordance with JIS K 6400-2) is from 40 to 350 N and more preferably from 60 to 200 N, and a thickness (before irregular shaping) is from 2 to 30 mm and more preferably from 3 to 20 mm. In a case in which the soft polyurethane foam 11 is too hard, it is difficult to perform irregular shaping, and a cushioning property and touch feeling deteriorate. In addition, in a case in which the thickness of the soft polyurethane foam 11 is too thin, the irregularities obtained by irregular shaping are inconspicuous.

The moisture-curable hot melt adhesive 15 is an adhesive which is applied by heating and melting, and then reacts and cures by water such as moisture in the air, and preferably contains a urethane prepolymer having an isocyanate group at a terminal as a main component.

The urethane prepolymer having a terminal isocyanate group is composed of a urethane prepolymer containing a polyol component and a polyisocyanate component as raw materials. As the polyol component, for example, a polyester-based polyol, a polyether-based polyol, a polyether/polyester block polyol, or a mixed system is preferably used. A number average molecular weight of the polyol is preferably from 500 to 5000, more preferably from 1000 to 4000, and still more preferably from 1500 to 3000. The number of functional groups in the polyol is preferably from 2 to 4, and more preferably from 2 to 3. A small amount of monool (number of functional groups is 1) may be contained.

As the polyisocyanate component, for example, toluene diisocyanate, diphenylmethane diisocyanate, or polymeric MDI is used.

An NCO group content of the urethane prepolymer is not particularly limited, and is preferably from 0.3% to 25%, more preferably from 0.7% to 15%, and still more preferably from 1% to 10%.

In a case in which the NCO group content is low, since a curing reaction cannot be sufficiently obtained, heat resistance tends to be poor and shapability of irregularities tends to be poor. In addition, in a case in which the NCO group content is high, a curing reaction is obtained, but an adhesive layer becomes hard, touch feeling of a laminated product deteriorates, and a laminated structure that is difficult to shape is obtained.

Examples of the hot melt adhesive include a thermoplastic hot melt adhesive using a thermoplastic resin, in addition to the moisture-curable hot melt adhesive used in the invention. The thermoplastic hot melt adhesive can be repeatedly activated by heating and cured by cooling. However, in a case in which an adhesive layer with the adhesive is heated again, the adhesive strength may decrease at a stage where a thermal history is applied.

A melting point of the urethane prepolymer is preferably from 30°C to 100°C, more preferably from 35°C to 80°C, and still more preferably from 40°C to 70°C. A viscosity of the urethane prepolymer is preferably from 1000 to 10000 mPa s, more preferably from 1500 to 8000 mPa·s, and still more preferably from 2000 to 6000 mPa·s.

Examples of a method of applying the moisture-curable hot melt adhesive 15 to the soft polyurethane foam 11 include application by a roll coater having a heat roll, application by a roll coater using a gravure roll, application by a T-die head, and spray application of a liquefied moisture-curable hot melt adhesive. A heat-melting temperature of the moisture-curable hot melt adhesive is from 70°C to 180°C, and an application amount thereof is preferably from 5 to 70 g/m².

The surface member 21 is made of a flexible material, is made of an appropriate material such as a knitted fabric, a woven fabric, a nonwoven fabric, a synthetic leather, or a natural leather, and is selected according to a use of the irregularly shaped laminated body 10. Examples of the knitted fabric include tricot, jersey, and double raschel, examples of the woven fabric include T-cloth woven fabric and Satin woven fabric, and examples of the synthetic leather include vinyl chloride resin leather and polyurethane resin leather. Examples of materials of the knitted fabric and the woven fabric can include nylon, polyester, and rayon.

The back surface member 31 layered if necessary is made of an appropriate material such as a knitted fabric, a woven fabric, or a nonwoven fabric. Nylon tricot 17 deciTex (NY-17 dtex), a nylon marquee, ester tricot, and the like are used as the knitted fabric, gold cloth and the like are used as the woven fabric, and nylon nonwoven fabric 30 g/m², ester nonwoven fabric 50 g/m², and the like are used as the nonwoven fabric.

In the irregular shaping step, the irregularities are shaped on a surface of the laminated body for irregular shaping 10A by subjecting the laminated body for irregular shaping 10A to thermal compression with a thermal compression device having irregularities on a pressing surface thereof to obtain the irregularly shaped laminated body 10 shown in Fig. 1. In the thermal compression for the laminated body for irregular shaping 10A, it is preferable to set a heating temperature on the surface member 21 side to be lower than that on the other side (back surface member 31) to suppress thermal deterioration of the surface member 21.

Examples of a thermal compression method include a thermal pressing method using an irregularity mold having irregularities formed on a surface thereof and a roll thermal compression method using an embossing roll.

An embodiment of the irregular shaping by the thermal pressing method will be described.

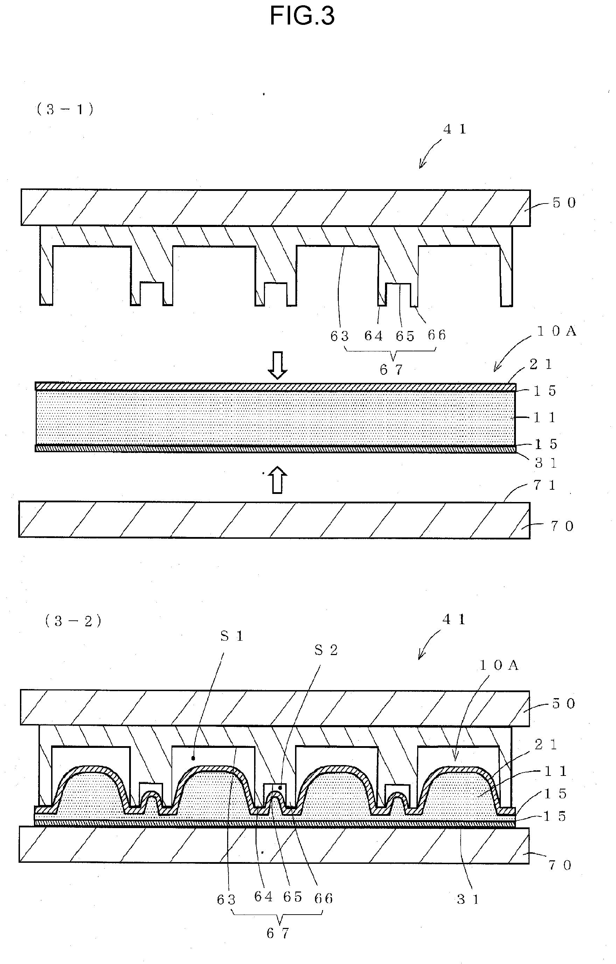

The thermal compression device 41 used in the hot pressing method shown in Fig. 3 includes a surface side mold 50 and a back surface side mold 70, and in an example illustrated in the drawing, the surface side mold 50 corresponds to an upper mold and the back surface side mold 70 corresponds to a lower mold.

The surface side mold 50 is a mold disposed to face the surface member 21 of the laminated body for irregular shaping 10A, has an irregularity 67 on a pressing surface with respect to the surface member 21, and is configured to be heated to a predetermined temperature by a heating device such as an electric heater.

The back surface side mold 70 is a mold disposed to face the back surface member 31 of the laminated body for irregular shaping 10A, and a pressing surface with respect to the back surface member 31 is formed by a flat surface 71 in an example illustrated in the drawing.

The surface side mold 50 is positioned above the back surface side mold 70 with the irregularity 67 facing downward, and can approach and separate from the back surface side mold 70.

Note that a vertical positional relationship between the surface side mold 50 and the back surface side mold 70 may be reversed.

The irregularity 67 of the surface side mold 50 include a first recess 63, a protrusion 64, a second recess 65, and a protrusion 66, and is used to form a first protrusion 36, a recess 37, a second protrusion 38, and a recess 39 of an irregularly shaped molded body 10. The irregularity 67 may be tapered to adjust feeling of irregularities. Further, the back surface side mold 70 may also be provided with irregularities similarly to the surface side mold 50.

As shown in (3-1) of Fig. 3, the laminated body for irregular shaping 10A is disposed upward between the surface side mold 50 and the back surface side mold 70 such that the surface member 21 faces the irregularity 67 of the surface side mold 50.

Next, as shown in (3-2) of Fig. 3, the surface side mold 50 and the back surface side mold 70 are brought close to each other, and the laminated body for irregular shaping 10A is subjected to thermal compression between the surface side mold 50 and a lower mold 70. A temperature of the surface side mold 50 and the back surface side mold 70 in this case may be in the range of from 110°C to 220°C, and is preferably in the range of from 130°C to 180°C from a viewpoint of deterioration and discoloration of a material. It is preferable to suppress thermal deterioration of the surface member 21 of the laminated body for irregular shaping 10A by setting the temperature of the surface side mold 50 on the surface member 21 side to be lower than the temperature of the back surface side mold 70. Furthermore, when exemplifying the mold temperature, a lower limit value of the temperature of the surface side mold 50 is preferably 110°C or higher, more preferably 115°C or higher, and still more preferably 120°C or higher. An upper limit value of the temperature of the surface side mold 50 is preferably 200°C or lower, more preferably 180°C or lower, and still more preferably 160°C or lower.

A lower limit value of the temperature of the back surface side mold 70 is preferably 130°C or higher, more preferably 140°C or higher, and still more preferably 150°C or higher. An upper limit value of the temperature of the back surface side mold 70 is preferably 220°C or lower, more preferably 210°C or lower, and still more preferably 200°C or lower.

During the thermal compression, the laminated body for irregular shaping 10A is compressed by the protrusions 64 and 66 of the surface side mold 50 and the back surface side mold 70, and the soft polyurethane foam 11 between the surface member 21 and the back surface member 31 is crushed at the compressed portion. Then, the soft polyurethane foam 11 is plastically deformed by heating in a state of being crushed by the protrusions 64 and 66 of the surface side mold 50, and recesses (recesses 37 and 39 of the irregularly shaped laminated body 10) are formed at positions corresponding to the protrusions 64 and 66 of the surface side mold 50.

In addition, in the first recess 63 and the second recess 65 of the surface side mold 50, the surface member 21 and the soft polyurethane foam 11 of the laminated body for irregular shaping 10A enter the first recess 63 and the second recess 65 to be in a raised state, so that protrusions (the first protrusion 36 and the second protrusion 38 of the irregularly shaped laminated body 10) are formed.

It is preferable that, in the irregularity 67 of the surface side mold 50, dimensions in the first recess 63 and the second recess 65 are set such that spaces S1 and S2 are formed between the inner surfaces of the first recess 63 and the second recess 65 and the surface member 21 of the laminated body for irregular shaping 10A at the time of subjecting the laminated body for irregular shaping 10A to thermal compression. Accordingly, it is possible to prevent the surface member 21 from coming into contact with the inner surfaces of the first recess 63 and the second recess 65 at the time of subjecting the laminated body for irregular shaping 10A to thermal compression, and it is possible to suppress thermal deterioration of the surface member 21.

In addition, in the laminated body for irregular shaping 10A, since the soft polyurethane foam 11 is bonded to the surface member 21 and the back surface member 31 by reaction curing of the moisture-curable hot melt adhesive 15, the moisture-curable hot melt adhesive 15 is not reactivated even by heating during the thermal compression in irregular shaping processing, the surface member 21 and the back surface member 31 are not displaced or lifted with respect to the soft polyurethane foam 11, and favorable irregularities are shaped.

Thereafter, a distance between the surface side mold 50 and the back surface side mold 70 is increased to release the compression on the laminated body for irregular shaping 10A, thereby obtaining the irregularly shaped laminated body 10 in Fig. 1. By the compression release, portions of the first protrusion 36 and the second protrusion 38 of the irregularly shape laminated body 10 also bulge toward the back surface member 31 side by a restoring force of the soft polyurethane foam 11, and irregularities are also formed on the back surface member 31 side.

On the other hand, in the roll thermal compression method (not illustrated), the surface member 21 of the laminated body for shaping 10A which is continuously supplied is thermally compressed with an embossing roll which has an irregular pattern on a surface thereof and can perform heating, thereby forming an irregular pattern on a surface. A heating temperature of the embossing roll is preferably from 180°C to 220°C, and a supply rate of the laminated body for shaping 10A is preferably about from 1 to 10 m/min.

### Examples

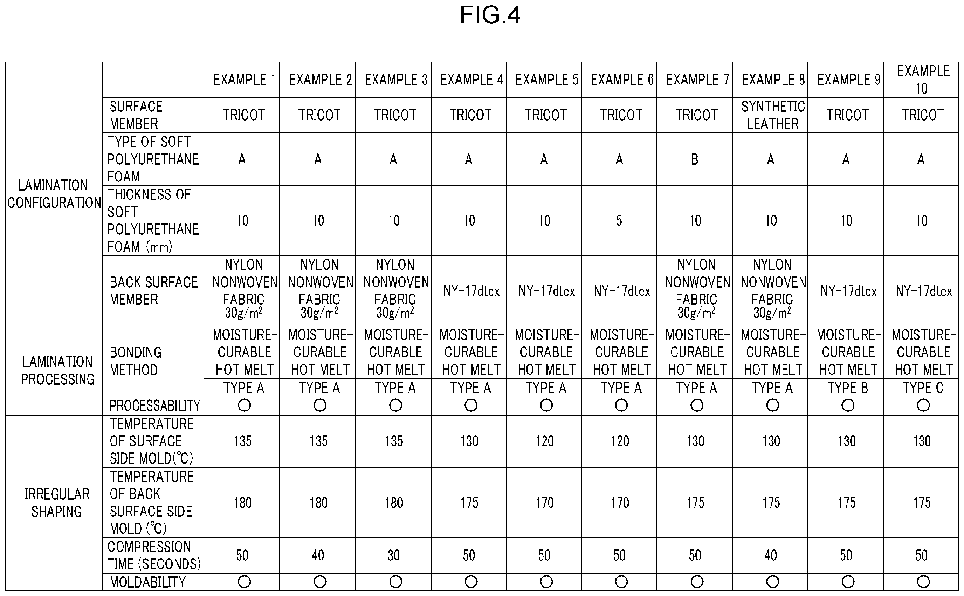

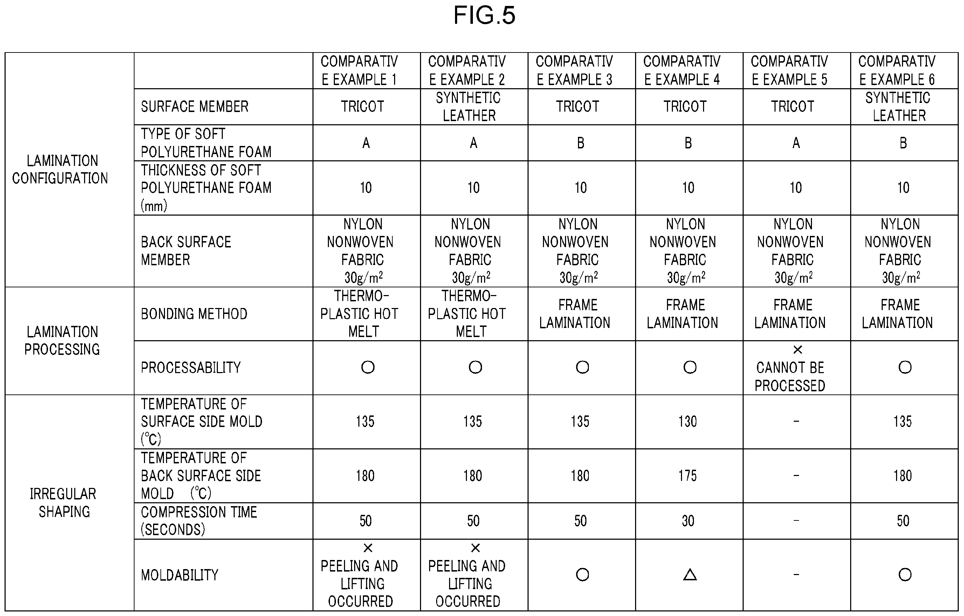

Examples and comparative examples shown in Figs. 4 and 5 will be described.

Examples 1 to 3 are examples in which polyester tricot having a basis weight of 300 g/m² was used for the surface member, nylon nonwoven fabric 30 g/m² (basis weight 30 g/m²) was used for the back surface member, soft polyurethane foam A which is ether-based polyurethane foam having density of 20 kg/m³, hardness of 98 N, product number: EL-45, and thickness 10 mm and manufactured by INOAC CORPORATION was used, a urethane-based moisture-curable hot melt adhesive type A (NCO group content = 1.8%, prepolymer type of polyester-based polyol and MDI, and manufactured by INOAC CORPORATION) was used as the moisture-curable hot melt adhesive to prepare a laminated body for irregular shaping, and irregular shaping conditions for the laminated body for irregular shaping varied.

Examples 4 to 6 are examples implemented with a lamination configuration in which the back surface member was changed to nylon tricot 17 deciTex (NY-17 dtex) in the configuration of Examples 1 to 3.

Regarding the urethane-based moisture-curable hot melt adhesive type A, a four-necked flask provided with a thermometer, a stirrer, and an inert gas inlet was charged with 100 parts by mass of a polyester polyol kept at 80°C and having a number average molecular weight of 2000 (adipic acid/butanediol) and functional group number of 2 and 19 parts by mass of an isocyanate component MDI were added thereto, and the mixture was reacted at 80°C and 40 rpm for 3 to 4 hours to produce a urethane-based moisture-curable hot melt adhesive having an NCO group content of 1.8%.

A laminated body for irregular shaping was prepared as follows. The moisture-curable hot melt adhesive was heated to 120°C to be made liquid, and applied to a surface of the soft polyurethane foam in an application amount of 30 g/m² and to the back surface in an application amount of 15 g/m² by a T-die applicator. The surface member and the back surface member were layered on both surfaces of the soft polyurethane foam via the applied moisture-curable hot melt adhesive, and the surface member and the back surface member and the soft polyurethane foam were sandwiched between pressing plates and pressure-bonded for 20 seconds to subject the moisture-curable hot melt adhesive to reaction curing with moisture in the air. After the application and pressure bonding, curing was performed for 10 hours or longer at normal temperature (23°C) and a humidity of 50% R.H. or higher. Curing for 5 hours or longer under these conditions is preferable from the viewpoint of adhesion performance. A bonding state between the surface member and the back surface member and the soft polyurethane foam was favorable.

The irregular shaping was performed using the surface side mold 50 and the back surface side mold 70 shown in Fig. 3. The first recess 63 of the surface side mold 50 has an internal depth (height) of 15 mm and a width of 23 mm, the protrusions 64 and 66 have a width of 1 mm, and the second recess 65 has an internal depth (height) of 8 mm and a width of 6 mm.

A distance between the protrusions 64 and 66 of the surface side mold 50 and a mold surface on the back surface side 70 at the time of thermal compression is 0.5 mm.

The processability of a lamination processing column in Figs. 4 and 5 was evaluated as "o" when the surface member and the back surface member are bonded favorably to the soft polyurethane foam at the time of preparing the laminated body for irregular shaping.

The moldability in the irregular shaping in Figs. 4 and 5 was evaluated as "o" in a case in which neither peeling nor lifting was present on the surface member and the back surface member, "△" in a case in which peeling or lifting was slightly present, and "×" in a case in which peeling or lifting was clearly present.

### · Example 1

Example 1 is an example in which a temperature of the surface side mold was 135°C, a temperature of the back surface side mold was 180°C, and a compression time was 50 seconds when shaping irregularities, and defects such as peeling and lifting were not observed in the surface member and the back surface member, and favorable irregularities were formed.

Example 2 is an example in which a temperature of the surface side mold was 135°C, a temperature of the back surface side mold was 180°C, and a compression time was 40 seconds during irregular shaping, and peeling and lifting were not observed in the surface member and the back surface member, and favorable irregularities were formed.

Example 3 is an example in which a temperature of an upper mold on the surface member side was 135°C, a temperature of a lower mold on the back surface member side was 180°C, and a compression time was 30 seconds during irregular shaping, and peeling and lifting were not observed in the surface member and the back surface member, and favorable irregularities were formed.

Example 4 is an example in which a temperature of the surface side mold was 130°C, a temperature of the back surface side mold was 175°C, and a compression time was 50 seconds during irregular shaping, and peeling and lifting were not observed in the surface member and the back surface member, and favorable irregularities were formed.

Example 5 is an example in which a temperature of the surface side mold was 120°C, a temperature of the back surface side mold was 170°C, and a compression time was 50 seconds during irregular shaping, and peeling and lifting were not observed in the surface member and the back surface member, and favorable irregularities were formed.

### · Example 6

Example 6 is an example in which a thickness of the soft polyurethane foam to be used in the laminated body for irregular shaping was set to 5 mm, and the preparation of the laminated body for irregular shaping and the irregular shaping were performed under the same other conditions as in Example 5.

In Example 6, peeling and lifting were not observed in the surface member and the back surface member, and favorable irregularities were formed as in Example 5.

### · Example 7

Example 7 is an example in which a soft polyurethane foam B which is a polyether-based polyurethane foam having an ester component, a density of 20 kg/m³, a hardness of 100 N, a product number: EL-64, and a thickness of 10 mm and manufactured by INOAC CORPORATION was used as the soft polyurethane foam, and the preparation of the laminated body for irregular shaping and the irregular shaping were performed under the same other conditions as in Example 4.

In Example 7, peeling and lifting were not observed in the surface member and the back surface member, and favorable irregularities were formed as in Example 4.

### · Example 8

Example 8 is an example in which synthetic leather is used as the surface member, the compression time during the irregular shaping was 40 seconds, and the preparation of the laminated body for irregular shaping and the irregular shaping were performed under the same other conditions as in Example 4. As the synthetic leather, a synthetic resin sheet (backing material: knitted fabric layered product) made of polyvinyl chloride and having a thickness of 1.3 mm was used.

In Example 8, peeling and lifting were not observed in the surface member and the back surface member, and favorable irregularities were formed as in Example 4.

### · Example 9

Example 9 is an example in which the irregular shaping is performed under the same conditions as in Example 4, using a urethane-based moisture-curable hot melt adhesive type B (NCO group content = 4.0%, prepolymer type of polyester-based polyol and MDI, and manufactured by INOAC CORPORATION).

Regarding the urethane-based moisture-curable hot melt adhesive type B, a urethane-based moisture-curable hot melt adhesive was produced in the same manner as in the urethane-based moisture-curable hot melt type A, except that the NCO group content was changed to 4.0%.

In Example 9, peeling and lifting were not observed in the surface member and the back surface member, and favorable irregularities were formed as in Example 4.

### · Example 10

Example 10 is an example in which the irregular shaping is performed under the same conditions as in Example 4, using a urethane-based moisture-curable hot melt adhesive type C (NCO group content = 1.8%, prepolymer type with MDI in combination system of polyester polyol + polyether-based polyol, and manufactured by INOAC CORPORATION).

Regarding the urethane-based moisture-curable hot melt adhesive type C, a four-necked flask provided with a thermometer, a stirrer, and an inert gas inlet was charged with 50 parts by mass of a polyester polyol kept at 80°C and having a number average molecular weight of 2000 (sebacic acid/hexanediol) and functional group number of 2, 50 parts by mass of polyether polyol kept at 80°C and having a number average molecular weight of 2000 (polypropylene glycol) and functional group number of 2, and 19 parts by mass of an isocyanate component MDI were added thereto, and the mixture was reacted at 80°C and 40 rpm for 3 to 4 hours to produce a urethane-based moisture-curable hot melt adhesive having an NCO group content of 1.8%.

In Example 10, peeling and lifting were not observed in the surface member and the back surface member, and favorable irregularities were formed as in Example 4.

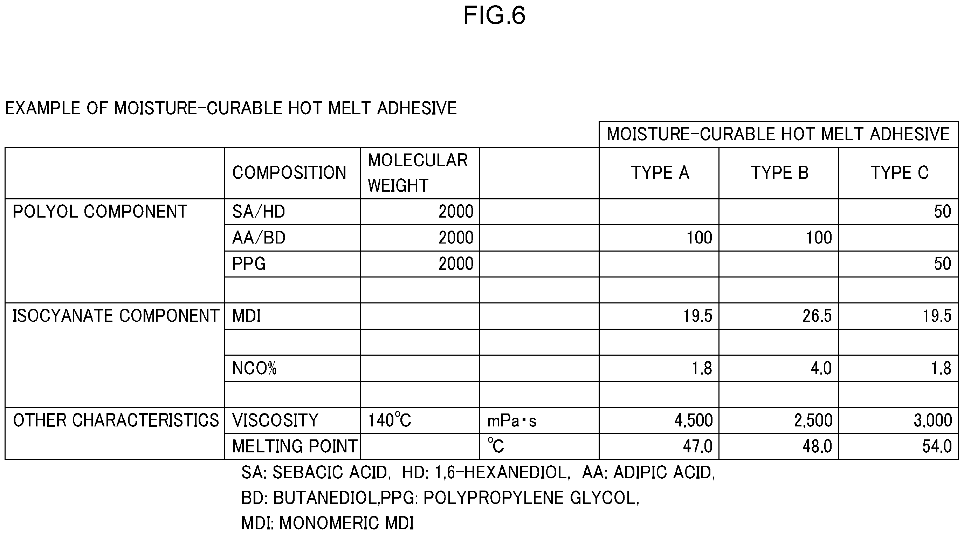

The contents of the moisture-curable hot melt adhesive types A to C used in Examples 1 to 10 are shown in the table in Fig. 6.

The NCO group content of the urethane-based moisture-curable hot melt adhesive is measured in accordance with the toluene/dibutylamine·hydrochloric acid method of JIS K 1603-2007, a melting point is measured in accordance with the plastic transition temperature measurement method of JIS K 7121-1987, and a viscosity is measured at an angular frequency of 1 rad/s and a temperature of 140°C using a rheometer MCR302 of Anton Paar GmbH.

### · Comparative Example 1

Comparative Example 1 is an example in which a thermoplastic hot melt adhesive manufactured by Moresco Co., Ltd., product number TN716Z was used instead of the moisture-curable hot melt adhesive of Example 1, and the procedure was performed under the same conditions as in Example 1 except for the preparation of the laminated body for irregular shaping.

In the preparation of the laminated body for irregular shaping in Comparative Example 1, the thermoplastic hot melt adhesive was heated to 180°C to be made liquid, and applied to the surface of the soft polyurethane foam in an application amount of 30/m² and the back surface in an application amount of 15/m² by a T-die applicator, the surface member and the back surface member were layered on both surfaces of the soft polyurethane foam via the applied thermoplastic hot melt adhesive, the laminated body was sandwiched between pressing plates and pressure-bonded for 20 seconds, and the thermoplastic hot melt adhesive was cured by cooling.

The processability of the laminated body for irregular shaping in Comparative Example 1 was evaluated as "o" because the surface member and the back surface member bonded favorably to the soft polyurethane foam.

Also, the moldability in the irregular shaping in Comparative Example 1 was evaluated as "×" because peeling and lifting were observed on the surface member and the back surface member due to reactivation of the thermoplastic hot melt adhesive at the time of thermal compression during the irregular shaping.

### · Comparative Example 2

Comparative Example 2 is an example in which synthetic leather (the same material as in Example 8) was used for the surface member, and a thermoplastic hot melt adhesive was used for bonding the soft polyurethane foam to the surface member and the back surface member.

In Comparative Example 2, the preparation of the laminated body for irregular shaping and the irregular shaping were performed under the same other conditions as in Comparative Example 1, except that the synthetic leather was used as the surface member.

The processability of the laminated body for irregular shaping in Comparative Example 2 was evaluated as "o" because the surface member and the back surface member bonded favorably to the soft polyurethane foam as in Comparative Example 1.

Also, the moldability in the irregular shaping in Comparative Example 2 was evaluated as "×" because peeling and lifting were observed on the surface member and the back surface member due to reactivation of the thermoplastic hot melt adhesive at the time of thermal compression during the irregular shaping, as in Comparative Example 1.

### · Comparative Example 3

Comparative Example 3 is an example in which ester-based polyurethane foam was used as the soft polyurethane foam, and bonding the soft polyurethane foam to the surface member and the back surface member was performed by frame lamination. The surface member is the same nylon tricot as in Comparative Example 1.

In Comparative Example 3, soft polyurethane foam B (the same as in Example 7) was used, both surfaces of the soft polyurethane foam were toasted and melted with a burner, and the surface member and the back surface member were layered and bonded on the melted surface to prepare a laminated body for irregular shaping. The irregular shaping with respect to the laminated body for irregular shaping was performed in the same manner as in Comparative Example 1.

The processability of the laminated body for irregular shaping in Comparative Example 3 was evaluated as "o" because the surface member and the back surface member bonded favorably to the soft polyurethane foam.

The moldability in the irregular shaping in Comparative Example 3 was evaluated as "○", because peeling and lifting were not observed on the surface member and the back surface member.

### · Comparative Example 4

Comparative Example 4 is an example in which polyether-based polyurethane foam B having an ester component was used for the soft polyurethane foam, and the soft polyurethane foam was bonded to the surface member and the back surface member by frame lamination, and same procedure as in Comparative Example 3 was performed, except that a mold temperature at the time of irregular shaping was lowered by 5°C from the temperatures of the surface side mold and the back surface side of Comparative Example 3, and the compression time was set to 30 seconds.

The temperatures of the surface side mold and the back surface side mold of Comparative Example 4 are the same as those of the surface side mold and the back surface side mold of Example 7.

The processability of the laminated body for irregular shaping in Comparative Example 4 was evaluated as "o" because the surface member and the back surface member bonded favorably to the soft polyurethane foam.

The moldability in the irregular shaping in Comparative Example 4 was evaluated as "△" because although there was no peeling or lifting on the surface member and the back surface member, since the shaping time was short, the irregularity shapability was poor, the pressure bonding of the irregularity 35 in Fig. 1 was insufficient, and the recess was indistinct.

### · Comparative Example 5

Comparative Example 5 is an example in which ether-based polyurethane foam A was used as the soft polyurethane foam, and the soft polyurethane foam was bonded to the surface member and the back surface member by frame lamination.

In Comparative Example 5, the processability was evaluated as "×" because, since the soft polyurethane foam was an ether-based polyurethane foam in the preparation of the laminated body for irregular shaping, the surface member and the back surface member could not be bonded to the soft polyurethane foam.

Since a laminated body for irregular shaping was not obtained, the subsequent irregular shaping processing could not be performed.

### · Comparative Example 6

Comparative Example 6 is an example in which synthetic leather was used as the surface member, and a polyether-based polyurethane foam B having an ester component was used as the soft polyurethane foam, and frame lamination and irregular shaping were performed in the same manner as in Comparative Example 3.

In Comparative Example 6, the processability of the laminated body for irregular shaping was evaluated as "○", and the moldability in the irregular shaping was evaluated as "o" as in Comparative Example 3.

As described above, according to the invention, favorable irregularities can be shaped using general-purpose soft polyurethane foam without using a soft polyurethane foam having a special configuration.

Note that the invention is not limited to the examples, and can be modified without departing from the gist of the invention.

### Industrial Applicability

The laminated body of the invention can be used for an interior material of a vehicle, for example, a skin for a seat, a door trim, a skin for furniture, or the like.

### Reference Signs List

- 10: Irregularly shaped laminated body
- 10A: Laminated body for irregular shaping
- 11: Soft polyurethane foam
- 15: Moisture-curable hot melt adhesive
- 21: Surface member
- 31: Back surface member
- 35: Irregularity
- 41: Thermal compression device
- 50: Surface side mold
- 67: Irregularity
- 70: Back surface side mold

## Claims

1. A method of producing an irregularly shaped laminated body, comprising:
forming a laminated body for irregular shaping by layering soft polyurethane foam and a flexible surface member via a moisture-curable hot melt adhesive; and
subjecting the laminated body for irregular shaping to thermal compression with a thermal compression device having irregularities on a pressing surface and performing irregular shaping on the laminated body for irregular shaping.

2. The method of producing a laminated body according to claim 1, wherein the soft polyurethane foam is ether-based polyurethane foam.

3. The method of producing an irregularly shaped laminated body according to claim 1 or 2, wherein the thermal compression with respect to the laminated body for irregular shaping is performed on a surface member side of the laminated body for irregular shaping at a lower temperature than on another surface member side.

4. The method of producing an irregularly shaped laminated body according to claim 1 or 2, wherein, in the thermal compression molding device, a recess on the pressing surface that compresses a surface member side of the laminated body for irregular shaping has a dimension set in the recess such that a space is formed between an inner surface of the recess and the surface member of the laminated body for irregular shaping during the thermal compression.

5. A laminated body for irregular shaping which is obtained by layering and integrating a flexible surface member on and with a soft polyurethane foam, wherein the soft polyurethane foam and the surface member are bonded by a moisture-curable hot melt adhesive.

6. An irregularly shaped laminated body which is obtained by layering and integrating a flexible surface member on and with a soft polyurethane foam,
wherein the soft polyurethane foam and the surface member are bonded by a moisture-curable hot melt adhesive.

7. The irregularly shaped laminated body according to claim 6, wherein the irregular shaping is shaping performed by thermal compression.
